# EUROPÄISCHE PATENTSCHRIFT

(11) **EP 1 910 711 B1**
(45) Veröffentlichungstag und Bekanntmachung des Hinweises auf die Patenterteilung: **19.01.2011**
(21) Anmeldenummer: 06761743.1
(22) Anmeldetag: 01.07.2006
(51) Int. Cl.: B60K 6/48, F16H 37/08

(54) **LEISTUNGSVERZWEIGTES GETRIEBE MIT MEHREREN ÜBERSETZUNGSBEREICHEN MIT STUFENLOS VERSTELLBARER ÜBERSETZUNG**
POWER-SPLITTING GEARBOX WITH SEVERAL RATIO RANGES WITH STEPLESSLY ADJUSTABLE RATIOS
BOITE A DERIVATION DE PUISSANCE COMPORTANT PLUSIEURS PLAGES DE TRANSMISSION A REGLAGE VARIABLE

(30) Priorität: 23.07.2005 DE 102005034524; 07.10.2005 DE 102005048071
(43) Veröffentlichungstag der Anmeldung: 16.04.2008
(73) Patentinhaber: Schaeffler Technologies GmbH & Co. KG, 91074 Herzogenaurach (DE)
(72) Erfinder: TENBERGE, Peter, 09123 Chemnitz (DE)
(86) Internationale Anmeldenummer: PCT/DE2006/001141
(87) Internationale Veröffentlichungsnummer: WO 2007/012303

(56) Entgegenhaltungen:
- EP-A- 0 143 365
- WO-A-03/047898
- WO-A-2006/043812
- DE-A1- 10 358 114
- DE-A1-102004 056 234
- US-A- 4 553 450
- US-A- 4 599 916
- US-A- 5 564 998
- US-A- 5 720 686

## Beschreibung

Automatische Getriebe mit kontinuierlich verstellbarer Übersetzung gewinnen wegen des mit ihnen einhergehenden hohen Fahrkomforts und insbesondere wegen des geringeren Kraftstoffverbrauchs gegenüber herkömmlichen, mit Planetensätzen arbeitenden, gestuften automatischen Getrieben in Kraftfahrzeugen zunehmend Interesse. Solche stufenlosen Getriebe enthalten typischerweise einen Variator, welcher durch zwei von einem Umschlingungsmittel umschlungene Kegelscheibenpaare gebildet ist, wobei der Abstand zwischen den Kegelscheiben der Kegelscheibenpaare zur Übersetzungsverstellung gegensinnig verstellbar ist.

Ein Problem bei diesen Variatoren liegt in ihrem begrenzten Übersetzungsverstellbereich und dem begrenzten Drehmomentübertragungsvermögen. Um die Getriebespreizung, d.h. den Übersetzungsverstellbereich und das Drehmomentübertragungsvermögen zu vergrößern, wurden leistungsverzweigte automatische Getriebe geschaffen, bei welchen der Variator über wenigstens eine Kupplung in unterschiedlicher Weise mit einem Zahnradgetriebe verbindbar ist. Der Verstellbereich des Variators wird je nach Kupplungsstellung beim Verändern der Übersetzung des Gesamtgetriebes in der einen oder anderen Richtung durchfahren, so dass sich eine vergrößerte Getriebespreizung bei gleicher oder sogar reduzierter Variatorspreizung ergibt. Außerdem muss ein Variator zumindest im leistungsverzweigten Getriebe, bei dem ein Teil des Antriebsmoments parallel zum Variator über die Kupplung unmittelbar zum Zahnradgetriebe oder dem Abtrieb übertragen wird, nicht das gesamte Antriebsmoment übertragen, wodurch das Drehmomentübertragungsvermögen des Getriebes vergrößert wird.

Solche leistungsverzweigten, stufenlos verstellbaren Getriebe sind auch als Hybridmaschinen, d.h. mit integrierter E-Maschine, bekannt geworden.

Aus der US 3340749 und der DE 12 32 834 sind leistungsverzweigte stufenlose Getriebe, sogenannte CVT-Getriebe, bekannt, die neben dem Variator ein Planetengetriebe aufweisen. Dabei ist der Planetensatz derart in das Getriebe integriert, dass er zwischen dem Abtrieb und dem Variator angeordnet ist. Der Antrieb des Getriebes ist drehfest mit einer der Variatorwellen verbunden, jedoch ist keine der Variatorwellen drehfest mit dem Abtrieb verbunden.

Aus der DE 102 47 174 A1 und der DE 103 58 114 A1 sind Getriebestrukturen mit einem Variator und einem Planetengetriebe bekannt, bei denen der Planetensatz derart eingebaut ist, dass er zwischen dem Variator und dem Antrieb angeordnet ist. Dies bedeutet, dass keine der Variatorwellen drehfest mit dem Antrieb verbunden ist, jedoch eine der Variatorwellen mit dem Abtrieb des Getriebes drehfest verbunden ist. Insbesondere ist der Antrieb bei den genannten Strukturen mit dem Planetenträger des Planetengetriebes verbunden und das Planetengetriebe ist als Minusgetriebe ausgeführt. Daher sind diese Strukturen im Hinblick auf eine gleichmäßige Leistungsteilung günstig, was auf die Anbindung des Planetenträgers an den Getriebeeingang zurückzuführen ist. Hingegen wird eine Darstellung eines Rückwärtsgangs verhältnismäßig kompliziert, so dass gewöhnlich eine zusätzliche Welle zur Drehzahlumkehr erforderlich ist.

Aus den Dokumenten US 5 564 998, US 4 599 916 und US 4 553 450 sind bereits leistungsverzweigte Getriebe mit mehreren Übersetzungsbereichen mit stufenlos verstellbarer Übersetzung, enthaltend eine Antriebswelle zur drehfesten Verbindung mit einem Motor, ein Verteilergetriebe, einen Variator und eine Ausgangswelle, wobei das Verteilergetriebe ein Planetengetriebe ist und die Antriebswelle unmittelbar mit dem Hohlrad des Planentengetriebes kuppelbar ist, bekannt.

Davon ausgehend ist es Aufgabe der Erfindung, ein derartiges leistungsverzweigtes Getriebe weiter zu entwickeln. Außerdem ist ein Freilauf vorgesehen, der im Zusammenspiel mit einer geeigneten Betätigung des Variators eine ruckfreie Schaltung ermöglicht.

Diese Aufgaben werden mit einem leistungsverzweigten Getriebe mit den Merkmalen des Anspruchs 1 und einem Freilauf mit den Merkmalen des Anspruches 13gelöst. Bevorzugte Ausführungsformen sind in den abhängigen Ansprüchen angegeben.

Insbesondere enthält ein leistungsverzweigtes Getriebe mit mehreren Übersetzungsbereichen mit stufenlos verstellbarer Übersetzung eine Antriebswelle zur drehfesten Verbindung mit einem Motor, ein Verteilergetriebe, einen Variator und eine Ausgangswelle, wobei das Verteilergetriebe ein Planetengetriebe ist und die Antriebswelle unmittelbar mit dem Hohlrad des Planetengetriebes kuppelbar ist, wobei in das Getriebe eine E-Maschine (E-Motor) integriert ist, die zwischen dem Verteilergetriebe und einer Abtriebswelle angeordnet ist. Die E-Maschine kann einerseits dazu verwendet werden, die Leistung der Verbrennungskraftmaschine im Fahrbetrieb zu unterstützen, so dass ein Teil der Leistung durch die E-Maschine aufgebracht wird und andererseits auch beispielsweise für elektrisches Rangieren verwendet werden, bei dem keine Leistung von der Verbrennungskraftmaschine benötigt wird. Schließlich ist durch geeignete Integration der E-Maschine auch ein elektrischer Motorstart eines auch ggf. sehr kalten Verbrennungsmotors möglich. Um die jeweiligen Betriebsmodi zu schalten, sind geeignete Kupplungen vorgesehen, die den Momentenfluss entsprechend lenken. Mit den alternativen Startmöglichkeiten des Verbrennungsmotors kann beispielsweise bei unterschiedlichen Motortemperaturen Rechnung getragen werden.

Der Erfindung liegt dabei der Gedanke zugrunde, dass eine ungleichmäßige Leistungsteilung im Planetengetriebe bewusst ausgenutzt wird, und das Getriebe somit der ungleichmäßigen Nutzung der verschiedenen Übersetzungen eines Pkw-Getriebes angepasst wird. Somit kann in den am häufigsten genutzten Übersetzungen der Variator besonders entlastet werden, d.h. derart angepasst werden, dass er verhältnismäßig wenig Drehmoment übertragen muss. Dies vermindert Probleme, wie z.B. das Einlaufen des Umschlingungsmittels in die Kegelscheiben und wird insbesondere dann erreicht, wenn das Planetengetriebe nicht als konventionelles Minusgetriebe sondern als Plusgetriebe, d.h. mit Wendeplanetensatz, gestaltet wird, da dann mittels des Planetengetriebes besonders günstige Leistungsübertragungen erreicht werden können und ein Teil des Drehmoments nach einer ungleichmäßigen Leistungsteilung im Planetengetriebe in beispielsweise zwei mit dem Planetengetriebe darstellbaren Fahrbereichen unter Umgehung des Variators zum Abtrieb fließt.

Vorzugsweise ist zwischen der Antriebswelle und dem Hohlrad des Planetengetriebes eine Kupplung vorgesehen, was insbesondere dann vorteilhaft ist, wenn gleichzeitig eine Elektromaschine vorgesehen ist, so dass das Getriebe ohne Leistungsübertragung über die Kupplung zwischen der Antriebswelle und dem Hohlrad eine rein elektrische Rangiermöglichkeit vorsieht. Gleichzeitig wirkt die Kupplung bei geeigneter Bauart als Schwingungsdämpfung zwischen dem Motor und der Antriebswelle.

Dabei liegt der Variator im Leistungsfluss zwischen dem Verteilergetriebe und der Ausgangswelle, so dass im Fahrbetrieb im Planetengetriebe die Leistung der Verbrennungskraftmaschine vorzugsweise ungleichmäßig aufgeteilt wird, so dass ein erster Teil direkt zum Abtrieb fließen kann, während ein weiterer Teil über den Variator zum Abtrieb fließt.

Vorzugsweise ist im Verteilergetriebe die Verzweigung des Leistungsflusses derart, dass die Ausgangswelle unter Umgehung des Variators mit der Antriebswelle verbindbar ist und die Ausgangswelle über den Variator mit der Antriebswelle verbindbar ist. Dadurch können zwei verschiedene Fahrbereiche geschaffen werden, wobei der Abtrieb entweder über eine mit dem Sonnenrad des Planetengetriebes verbundene Welle oder eine mit dem Planetenträger des Planetenrads verbundene Welle erfolgt.

Daher ist vorzugsweise die E-Maschine mit einer mit dem Sonnenrad des Planetengetriebes drehfest verbundenen Welle verbunden.

Nach einer bevorzugten Ausführungsform ist der E-Motor in das Getriebegehäuse integriert, in das auch der Variator und das Verteilergetriebe aufgenommen sind. Betrachtet in einer Längsrichtung des Getriebes von der Antriebswelle zur Ausgangswelle ist dabei vorzugsweise die E-Maschine auf einer Seite des Variators und das Verteilergetriebe auf der anderen Seite des Variators positioniert. Daraus ergibt sich eine günstige und modulfähige Bauraumausnutzung, da Komponenten, die in der Regel nicht anzupassen sind, auf einer Seite des Getriebeteils angeordnet sind. Die E-Maschine, die einen wesentlichen Kostenbeitrag des Getriebes bildet, ist hinsichtlich Größe und Bauraumrestriktionen aufgrund ihrer Lage auf der anderen Seite des Variators, getrennt von den normalerweise nicht zu dimensionierenden Komponenten, maßgeschneidert an den Fahrzeugtyp bzw. Kundenwunsch anpassbar. Dadurch kann durch diese Anordnung ein kompaktes Getriebe geschaffen werden, bei dem der Elektromotor in das Getriebegehäuse integriert ist, das dennoch flexibel hinsichtlich Kundenwünschen ist.

Vorzugsweise besteht das Getriebegehäuse aus mindestens zwei Getriebegehäuseteilen, wobei der E-Motor bzw. die E-Maschine in einem separaten Getriebegehäuseteil untergebracht ist, das an das dem Variator und des Verteilergetriebe aufnehmende Getriebegehäuseteil anflanschbar ist.

Besonders günstig ist dabei eine Anordnung der Variatorwellen und der Antriebs- und Ausgangswellen derart, dass die Antriebswelle und/oder die Ausgangswelle parallel und außerhalb zu einer Ebene verlaufen, welche von den Variatorwellen aufgespannt wird. Gewöhnlich verlaufen die Antriebswelle und die Ausgangswelle auch unmittelbar parallel zu den Variatorwellen.

Nach einer bevorzugten Ausführungsform ist das Planetengetriebe als Wende-Planetengetriebe ausgeführt.

Um den verschiedenen Momentenflüssen im Getriebe gerecht zu werden, ist nach einer bevorzugten Ausführungsform eine Kupplung vorgesehen, mit der wahlweise eine mit dem Sonnenrad des Planetengetriebes drehfest verbundene Welle oder eine mit dem Planetenträger des Planetengetriebes drehfest verbundene Welle mit der Abtriebswelle verbindbar sind. Dies ermöglich es, zwei Fahrbereiche darzustellen, von denen einer über die mit dem Sonnenrad des Planetengetriebes drehfest verbundene Welle und der andere über die mit dem Planetenträger des Planetengetriebes drehfest verbundenen Welle abgegriffen wird.

Eine Schaltanordnung für ein leistungsverzweigtes Getriebe mit mehreren Übersetzungsbereichen mit stufenlos verstellbarer Übersetzung enthält eine erste Welle und eine zweite Welle, die entlang einer gemeinsamen Achse angeordnet sind und deren Außenmantelflächen zumindest in einem Grenzbereich zwischen der ersten und der zweiten Welle jeweils mit einem Zahnprofil versehen sind und die fluchten, und eine Hohlwelle, die die erste und zweite Welle umfasst und im Grenzbereich von zumindest der ersten oder der zweiten Welle mit einer Innenverzahnung versehen ist. Außerdem ist ein ringförmiges Schaltelement vorgesehen, das die erste und/oder zweite Welle umfasst und eine Innenverzahnung aufweist, die mit den jeweiligen Zahnprofilen der ersten und/oder zweiten Welle in Eingriff bringbar ist. Eine Außenverzahnung des Schaltelements ist mit der Innenverzahnung der Hohlwelle in Eingriff bringbar. Das Schaltelement ist durch eine Betätigungseinrichtung in Axialrichtung der ersten und zweiten Welle und der Hohlwelle verschiebbar, so dass es mit gleichzeitig der Innenverzahnung der Hohlwelle und der Außenverzahnung der ersten oder der zweiten Welle oder gleichzeitig mit den Außenverzahnungen der ersten und der zweiten Welle in Eingriff bringbar ist. Zwischen den verschiedenen Eingriffszuständen durchläuft das Schaltelement keinen eigens vorgehaltenen Neutralbereich, d.h. dass vorzugsweise die erste und die zweite Welle unmittelbar aneinandergrenzend angeordnet sind und die Innenverzahnung der Hohlwelle mit dem Außenverzahnungsbereich von einer der beiden Wellen derart fluchtend ausgerichtet ist, dass in Axialrichtung der Innenverzahnungsbereich der Hohlwelle der Länge des Schaltwegs des Schaltelements entspricht. Damit kann ein Neutralbereich beim Schalten des Schaltelements vermieden werden, weshalb die Schaltwege kurz sind. Das Schaltelement wird vorzugsweise ohne Hinterlegung ausgeführt um ein Verklemmen beim Herausnehmen zu verhindern. Gleichzeitig kann durch das Weglassen der Hinterlegung die Übertragungsfläche für das Drehmoment vergrößert werden ohne dass der Bauraumbedarf wächst.

Die Betätigung des Schaltelements erfolgt z.B. hydraulisch, wobei Hydraulikdruckkammern feststehend, d.h. nicht drehend mit den Wellen, vorgesehen sein können.

Vorzugsweise ist zur Betätigung des Schaltelements eine mit der Hohlwelle synchron drehende Schiebemuffe vorgesehen, welche einen Zapfen aufweist, der durch ein in der Hohlwelle vorgesehenes Langloch reicht. Der Zapfen steht mit dem Schaltelement derart in Eingriff, dass er die Axialverschiebung des Schaltelements bewirkt.

Zur Betätigung der Schiebemuffe ist vorzugsweise eine bezüglich der Wellen drehfeste Schaltgabel vorgesehen, die mittels ebenfalls feststehender Druckkammern hydraulisch betätigt wird. Diese Druckkammern sind bevorzugt konzentrisch zur Welle angeordnete Zylinder.

Eine solche Schaltanordnung wird vorzugsweise in einem leistungsverzweigten Getriebe mit mehreren Übersetzungsbereichen mit stufenlos verstellbarer Übersetzung derart eingesetzt, dass die Kupplungsanordnung zwischen der Ausgangswelle, einer mit dem Planetenträger des Planetengetriebes drehenden Welle und einer mit dem Sonnenrad des Planetengetriebes drehenden Welle durch die Schaltanordnung gebildet wird, wobei das Getriebe als Verteilergetriebe zusätzlich zu einem Variator für die stufenlose Verstellung ein Planetengetriebe enthält. Dadurch können für diese Kupplungsanordnung kurze Schaltwege realisiert werden und gleichzeitig kann auf eine Hinterlegung verzichtet werden, die in herkömmlichen Schaltelementen erforderlich ist, damit sie unter Last nicht herausfliegen sondern betätigt bleiben. Vielmehr kann mit der erfindungsgemäßen Kupplungsanordnung ein sicheres Lösen der Kupplungen gewährleistet werden.

Zum Betätigen der Schaltanordnung ist es erforderlich, dass die zu kuppelnden Wellen sich im Gleichlauf befinden. Dieser Gleichlauf liegt dann vor, wenn mit Hilfe des Variators die Bereichswechsel-Übersetzung eingestellt wird. Das exakte zeitliche Zusammenfallen der Schaltbetätigung mit dem Treffen der Bereichswechsel-Übersetzung stellt eine steuerungstechnische Schwierigkeit dar. Um dieses Problem zu lösen, wird erfindungsgemäß ein Freilauf im Getriebe vorgesehen, dessen Sperrung den Gleichlauf erzwingt. Damit ist sichergestellt, dass die Schaltanordnung problemlos betätigt werden kann.

Der Freilauf ist derart am Verteilergetriebe eingesetzt, dass er ein Überholen einer Welle unterbindet und somit den gesamten Planetenradsatz in Gleichlauf zwingt. Diese Situation des "versuchten Überholens" wird dadurch hergestellt, dass der Variator nicht nur die Umschaltübersetzung ansteuert, sondern derart angesteuert wird, dass er über die Umschaltübersetzung hinaus verstellen würde.

Eine Variatorkupplungseinheit zum Verbinden eines Variators mit einem Gegenbauteil zur kraftschlüssigen Übertragung von Leistung enthält eine Reibflächenanordnung, wobei die Reibfläche einer Kupplungsseite fest mit einer Scheibe des Variators verbunden ist. Die Kupplungsanordnung kann beispielsweise eine Einscheiben-, Mehrscheiben oder Kegelkupplung sein, wobei Lamellenkupplungen bevorzugt werden. Dabei sind beispielsweise die Außenlamellen fest mit einer Scheibe des Variators verbunden, während die Innenlamellen auf einem Gegenbauteil vorgesehen sind.

Die am Variator vorgesehene Reibfläche ist vorzugsweise in eine Ausnehmung der Festscheibe des Variators eingebracht. Dies erlaubt eine besonders platzsparende Anordnung. Die verhältnismäßig starke Biegung der Variatorwelle und die damit einhergehende örtliche Ungleichbelastung der Kupplungsbeläge wird bei dieser Anordnung der Kupplung in Kauf genommen. Bewusst wird eine Seite der Kupplung sehr steif mit dem Variator, insbesondere der Festscheibe verbunden.

Zur besseren Kompensation der Verformungen ist vorzugsweise zwischen der Reibflächenanordnung und dem Gegenbauteil ein Verformungskompensationsbauteil eingebracht, welches die Verformungen der Variatorwelle kompensiert. Beispielsweise kann das Verformungskompensationsbauteil als Steckverzahnung ausgebildet sein. Dies gewährleistet, dass z.B. eine Verzahnung am Gegenbauteil ausreichend von der Variatorverformung entkoppelt ist, so dass die Tragbildveränderungen akzeptabel sind.

Auch eine Pumpeneinheit kann beispielsweise über ein solches Verformungskompensationsbauteil verbunden sein, so dass die Pumpeneinheit nicht den vollen Verformungen der Variatorwelle ausgesetzt ist.

Nachfolgend wird die Erfindung am Beispiel der beigefügten Figuren beschrieben, in denen:
- Figur 1: eine schematische Darstellung eines erfindungsgemäßen Getriebes ist;
- Figur 2: eine schematische Darstellung einer alternativen Anordnung des erfindungs- gemäßen Getriebes zeigt;
- Figur 3: eine schematische Darstellung einer weiteren alternativen Anordnung des erfindungsgemäßen Getriebes zeigt
- Figur 4: einen Querschnitt durch ein Getriebe gemäß Figur 3 zeigt;
- Figur 5: eine Seitenansicht wesentlicher Komponenten des Getriebes aus Figur 4 ist;
- Figur 6: den Schaltzustand verschiedener Schaltelemente in verschiedenen Fahrsitu- ationen des Getriebes gemäß Figur 1 oder 2 oder 3 zeigt;
- Figur 7: schematisch den Momentenfluss durch das Getriebe gemäß Figur 1 beim elek- trischen Rangieren zeigt;
- Figur 8: den Momentenfluss durch das Getriebe gemäß Figur 1 im Fall eines elektri- schen Motorstarts bei Fahrzeugstillstand zeigt;
- Figur 9: schematisch den Momentenfluss im Getriebe gemäß Figur 1 bei einem alternativen elektrischen Motorstart zeigt;
- Figur 10: schematisch den elektrischen Motorstart aus dem Rangieren schematisch bei einem Getriebe gemäß Figur 1 zeigt;
- Figur 11: schematisch den Momentenfluss im Getriebe gemäß Figur 1 in einem ersten Fahrbereich zeigt;
- Figur 12: schematisch den Momentenfluss in einem Getriebe gemäß Figur 1 in einem zweiten Fahrbereich zeigt;
- Figur 13: eine Darstellung der Variatorübersetzungen im ersten und zweiten Fahrbereich bei dem Getriebe gemäß Figur 1 ist;
- Figur 14: den Stellleistungsanteil bei einem Getriebe gemäß Figur.1 im ersten und im zweiten Fahrbereich zeigt;
- Figur 15: eine Darstellung eines erfindungsgemäßen Schaltelements ist;
- Figur 16: eine Darstellung einer erfindungsgemäßen Variatorkupplungseinheit ist, und.
- Figur 17: eine Darstellung des erfindungsgemäßen Freilaufes zur Stabilisierung des Schaltpunktes zeigt

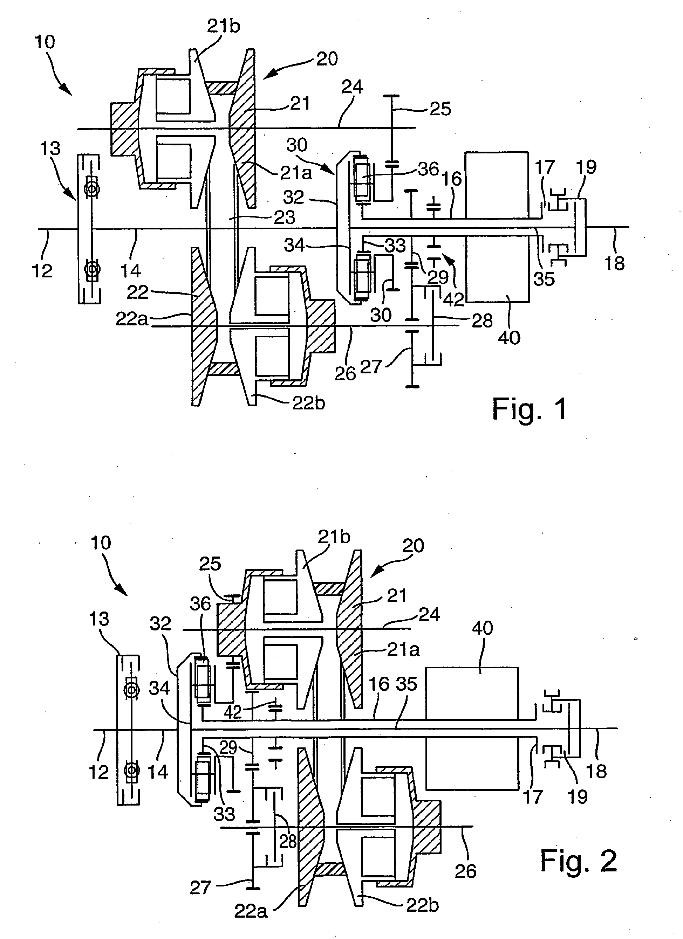

Figur 1 zeigt eine erste Ausführungsform eines leistungsverzweigten Getriebes mit mehreren Übersetzungsbereichen, insbesondere zwei Fahrbereichen, mit stufenlos verstellbarer Übersetzung. Insbesondere enthält das leistungsverzweigte Getriebe 10 eine Variatoreinheit 20, ein Planetengetriebe 30, das als Planetenwendegetriebe ausgeführt ist, sowie eine elektrische Maschine (E-Maschine) 40. Ausgehend von beispielsweise einem Verbrennungsmotor (nicht dargestellt) eines Kraftfahrzeugs kann Drehmoment über eine Motorausgangswelle 12 an eine Antriebswelle 14 des Getriebes übertragen werden, wenn die Kupplung 13 zwischen Motorausgangswelle 12 und Antriebswelle 14 geschlossen ist. Die Antriebswelle 14 ist außerdem drehfest mit dem Hohlrad 32 des Planetengetriebes 30 verbunden. Das Sonnenrad 33 des Planetengetriebes 30 ist drehfest mit einer Hohlwelle 16 verbunden, die über eine Kupplung 17 drehfest mit der Ausgangswelle 18 des Getriebes verbindbar ist. Die E-Maschine 40 sitzt auf der Hohlwelle 16. Der Planetenträger 34 des Planetengetriebes 30 ist drehfest mit einer Welle 35 verbunden, die Welle 35 ist über eine Kupplung 19 mit der Ausgangswelle 18 des Getriebes verbindbar. Die Planetenräder 36 kämmen in bekannter Weise mit dem Hohlrad 32 bzw. dem Sonnenrad 33.

Der Variator 20 weist zwei Kegelscheibenpaare 21, 22 auf, die durch ein Umschlingungsmittel 23 umschlungen sind. Jedes Kegelscheibenpaar 21 bzw. 22 weist eine Festscheibe 21 a, 22a und eine verstellbare Scheibe 21 b, 22b auf. Durch Verstellung der Verstellscheiben 21 b, 22b ist das Übersetzungsverhältnis zwischen den Variatoreinheiten 21, 22 einstellbar.

Das erste Kegelscheibenpaar 21 ist drehfest mit einer Welle 24 verbunden, welche mit einer dazu drehfesten Verzahnung bzw. einem Zwischenrad 25 versehen ist, das mit dem Planetenträger 34 kämmt.

Das zweite Kegelscheibenpaar 22 ist mit einer Welle 26 drehfest verbunden, welche über eine Kupplungseinrichtung 28 mit einem Zwischenrad 27 verbindbar ist. Das Zwischenrad 27 kämmt mit einer Verzahnung 29, die drehfest auf der Hohlwelle 16 vorgesehen ist, und ist beispielsweise als Zahnrad ausgeführt.

Schließlich ist auf der Hohlwelle 16 noch eine Pumpeneinheit 42 vorgesehen, um Verstellungen durch hydraulischen Druck realisieren zu können.

Die in Figur 2 dargestellte Ausführungsform unterscheidet sich von der in Figur 1 dargestellten Ausführungsform, bei der hinsichtlich ihrer Positionierung die Variatoreinheit 20, das Planetengetriebe 30 und die E-Maschine 40 in dieser Anordnung entlang der Getriebelängsachse, d.h. der Axialrichtung der Wellen 12, 14, 16 und 18 angeordnet sind, dadurch, dass zur platzgünstigen Anordnung diejenigen Teile, die gewöhnlich keinen Kundenmodifikationen unterworfen sind, auf einer Seite der verhältnismäßig voluminösen Variatoranordnung 20 vorgesehen sind (der linken Seite in Figur 2), während die oftmals Modifikationen unterworfene E-Maschine 40 auf der anderen Seite (rechts in Figur 2) vorgesehen ist. Insbesondere sind in der Axialrichtung der Wellen 14, 16 und 18 in dieser Reihenfolge das Planetengetriebe 30, die Variatoreinheit 20 sowie die E-Maschine 40 vorgesehen. Diese Anordnung hat zudem den Vorteil, dass die leistungsübertragende Verbindung zwischen der Hohlwelle 16 und dem zweiten Kegelscheibenpaar 22 des Variators ebenfalls zwischen das Planetengetriebe und den Variator bauraumtechnisch integriert sein kann und insbesondere die Kupplung 28, welche eine Drehmomentübertragung zwischen der Welle 26 des zweiten Kegelscheibenpaares 22 und der Hohlwelle 16 erlaubt bzw. unterbindet, in die Festscheibe 22a des zweiten Kegelscheibenpaars des Variators integriert werden kann, wie später erläutert wird. Auch das Zwischenrad 25 der ersten Variatoreinheit kann direkt in diesem Fall mit der Verstellscheibe 21 b, des ersten Kegelscheibenpaares 21 verbunden sein. Auch dies erlaubt eine platzsparende Anordnung. Schließlich ist die Pumpenanordnung 42 bauraumtechnisch günstig unterbringbar und kann so gestaltet werden, dass die Hydraulikkammern, die direkt oder indirekt von der Pumpeneinheit mit Hydraulikfluid beaufschlagt werden, drehfest angeordnet werden.

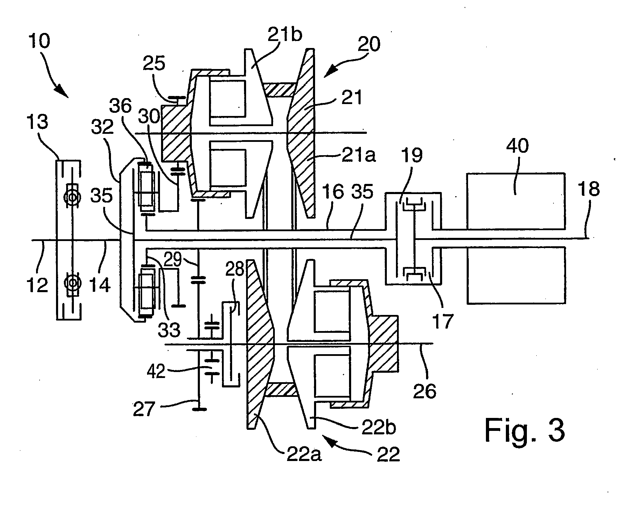

Die in Figur 3 dargestellte Ausführungsform unterscheidet sich von der in Figur 1 oder Figur 2 dargestellten Ausführungsform, bei der hinsichtlich ihrer Positionierung Schaltelemente 17 bzw. 19 in unmittelbarer Nähe der Getriebeausgangswelle 18 angeordnet sind, dadurch, dass zur platzgünstigen Anordnung die Schaltelemente auf einer Seite der E-Maschine 40 weiter im Inneren des Getriebes angeordnet sind. Durch die in Figur 3 dargestellte Anordnung der Bauelemente ist nun auch die E-Maschine 40 in unmittelbarer Nähe der Getriebeausgangswelle 18.

Ein weiterer Unterschied der Ausführungsform in Figur 3 gegenüber Figur 1 oder 2 ist der Einbauort der Pumpe (42). In Figur 1 oder 2 ist die Pumpe konzentrisch und funktionell auf der zentral angeordneten Welle (16), während sie in Figur 3 aus Bauraumgründen konzentrisch zur Scheibensatzwelle (26) ist, allerdings funktionell über die Zahnräder (29) und (27) unverändert mit der Welle (16) verbunden ist.

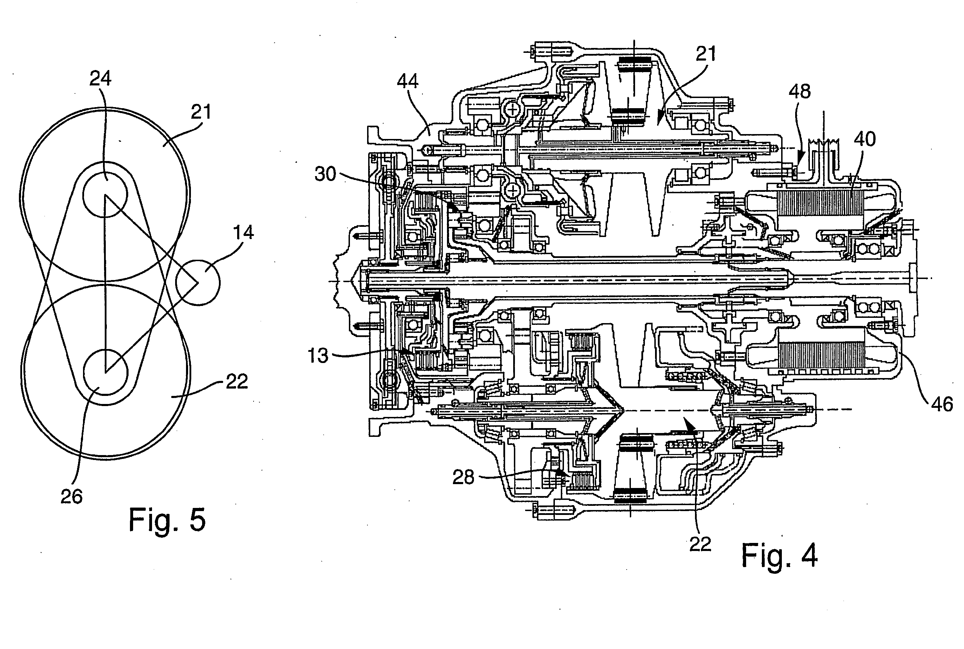

Bei der in Figur 3 dargestellten Anordnung ist es, wie Figur 4 zu entnehmen ist, insbesondere günstig, wenn die normalerweise nicht zu modifizierenden Elemente des leistungsverzweigten Getriebes 10, das in Figur 4 schematisch dargestellt ist, in einen eigenen Gehäuseteil 44 integriert sind. Insbesondere werden somit der Variator 20, das Planetengetriebe 30 und die zugehörigen Wellen und Kupplungen und hydraulischen Steuerungen (nicht dargestellt) als Modul im Gehäuseteil 44 angeordnet. Der Elektromotor 40 als Hybridmodul ist in einem separaten Gehäuseteil 46 untergebracht, das in Abhängigkeit von der kundenspezifisch wählbaren Größe des Elektromotors 40 dimensioniert werden kann. Es kann ferner beispielsweise mittels Flanschen 48 und Verschraubungen am Gehäuseteil 44 gesichert werden. Somit befinden sich all diejenigen Komponenten, welche nicht anzupassen sind, im in Figur 4 dargestellten linken Gehäuseteil 44, während der E-Motor im rechten Gehäuseteil 46 ist. Je nach dem in der Anwendung des Getriebes zur Verfügung stehenden Bauraum und den weiteren Anpassungswünschen kann eine verhältnismäßig große oder verhältnismäßig kleine E-Maschine 40 zur Anwendung kommen. In diesem Fall müssen neben der E-Maschine selbst nur deren im Gehäuseteil 46 integrierte Kühlung und der Gehäuseteil 46 selbst umdimensioniert werden.

Bei der in Figur 4 dargestellten Ausführungsform ist, wie Figur 5 entnehmbar ist, der Variator mit den jeweils als eigenen Wellen ausgeformten Variatorscheibensätzen 21, 22 derart angeordnet, dass die Variatorwellen 24, 26 eine Ebene aufspannen, welche unter der Zeichnungsebene aus Figur 4 liegt, wobei die Variatorkegelscheibenpaare 21, 22 in Figur 4 zur Zeichnungsdarstellung hochgeklappt sind. Die Wellen 12, 14, 16 liegen parallel zu den Variatorwellen 24, 26, jedoch außerhalb von der durch diese aufgespannten Ebene.

Nachfolgend wird der Betrieb eines leistungsverzweigten Getriebes gemäß Figur 1 bzw. Figur 2 oder 3, das zwei Fahrbereiche aufweist, anhand der Anordnung nach Figur 1 beschrieben. Die Funktionsweise des in Figuren 1, 2 oder 3 dargestellten Getriebes sind jedoch entsprechend.

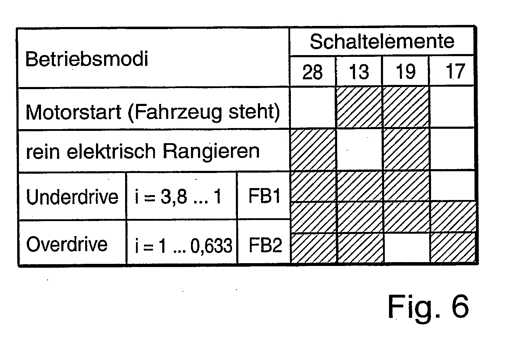

Aus Figur 6 sind die Zustände der Kupplungen für den Motorstart, das rein elektrische Rangieren und die beiden Fahrbereiche (FB1, FB2) entnehmbar, wobei ausgefüllte Kästchen geschlossene und leere Kästchen offene Kupplungen bedeuten.

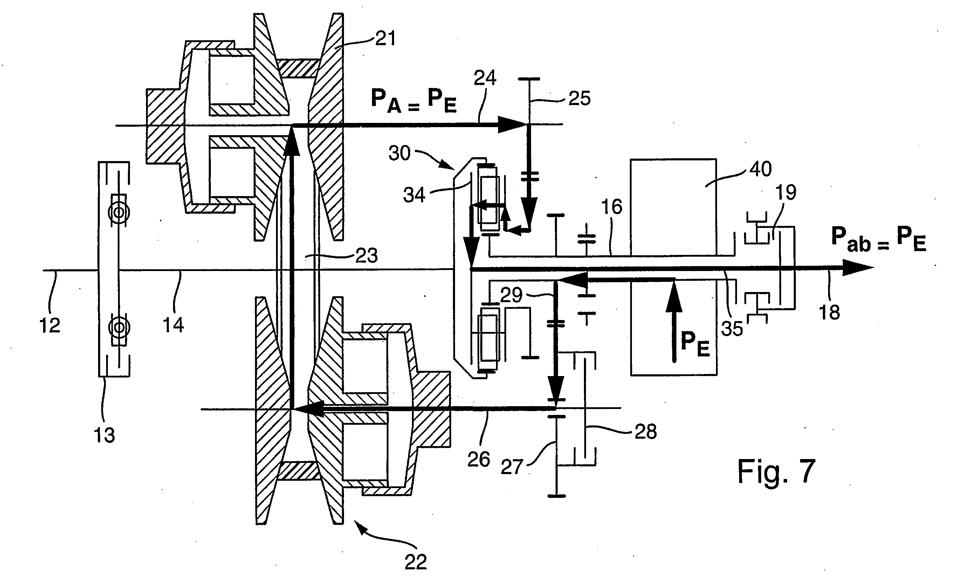

Figur 7 zeigt schematisch den Drehmomentenfluss für das rein elektrische Rangieren, d.h. ohne zu Hilfenahme des Verbrennungsmotors. Entsprechend ist die Kupplung 13 geöffnet, so dass ein Drehmoment von der mit dem Verbrennungsmotor (nicht dargestellt) verbundenen Welle 12 auf die Antriebswelle 14 übertragen wird.

Die von der elektrischen Maschine 40 erzeugte Leistung P_{E} wird mittels der Hohlwelle 16 und der mit der Hohlwelle 16 drehfesten Verzahnung 29 auf das Zwischenrad 27 und von dort auf die Welle 26 des zweiten Kegelscheibenpaars 22 übertragen. Dazu ist die Kupplung 28 geschlossen. Von der Welle 26 wird das Drehmoment über das zweite Kegelscheibenpaar 22, das Umschlingungsmittel 23 und das ersten Kegelscheibenpaar 21 des Variators auf die mit dem ersten Kegelscheibenpaar 21 verbundene Welle 24 übertragen. Dabei ist das Übersetzungsverhältnis i_{AB} zwischen dem ersten Kegelscheibenpaar 21 des Variators und dem zweiten Kegelscheibenpaar 22 des Variators dem minimalen Übersetzungsverhältnis des Variators entsprechend und beispielsweise 0,408. Das Drehmoment bzw. die Leistung wird schließlich von der Welle 24 des ersten Kegelscheibenpaars 21 über die Verzahnung 25, die mit dem Planetenträger 34 des Planetengetriebes 30 kämmt, abgegriffen und über die mit dem Planetenträger 34 fest verbundene Welle 16 mittels einer geschlossenen Kupplung 19 an die Ausgangswelle 18 übertragen. Somit kann im Wesentlichen die vom Elektromotor 40 bereitgestellte Leistung P_{E} als Abtriebsleistung P_{ab} an der Ausgangswelle 18 abgegriffen werden. Der Verbrennungsmotor steht und ist mittels der Kupplung 13 abgekuppelt.

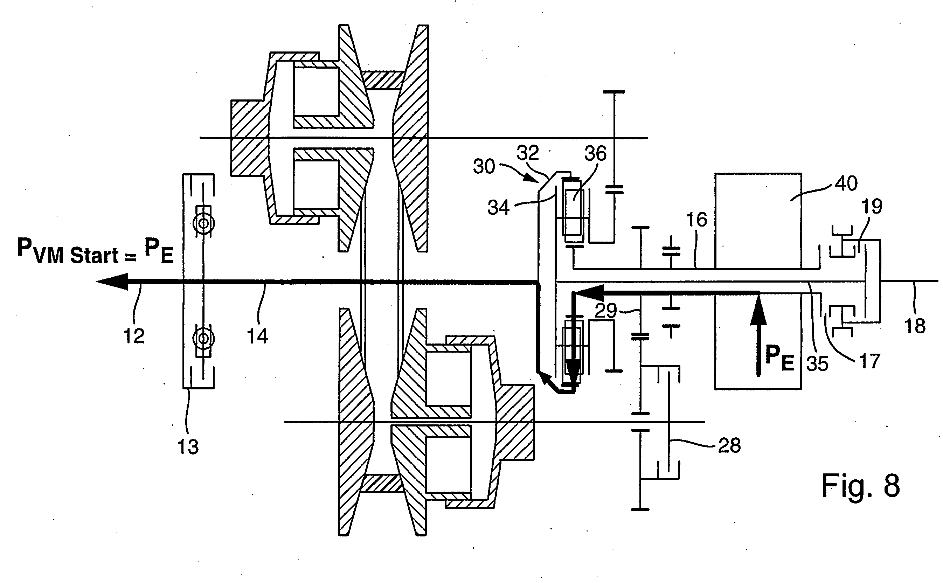

Eine Situation im E-CVT-Betrieb, mit welcher der Verbrennungsmotor mittels der Leistung der E-Maschine gestartet wird, wenn das Fahrzeug stillsteht, ist in Figur 8 dargestellt. Dazu wird die Leistung P_{E}, die von der E-Maschine 40 erzeugt wird, auf die Hohlwelle 16 übertragen. Der Abtrieb, insbesondere die Welle 35 und die Ausgangswelle 18 stehen still. Dazu ist die Kupplung 19 geschlossen, währen die Kupplung 17 geöffnet ist, so dass die Hohlwelle 16 entsprechend der Leistung P_{E} der E-Maschine drehen kann. Die Leistung P_{E} wird dann unter Berücksichtigung der Übersetzung des Planetengetriebes 30 bei stillstehendem Planetenträger 34 vom Sonnenrad 33 über die Planetenräder 36 auf das Ringrad 32 übertragen. Dabei ist die Übersetzung des Planetengetriebes beispielsweise i = +1,784. Besonders günstig sind Übersetzungen zwischen +1.7 und +2, um ein hohes Startmoment zu erhalten. Vom Ring- bzw. Hohlrad 32 wird die Leistung auf die mit dem Hohlrad 32 fest verbundene Antriebswelle 14 und von dort bei geschlossener Kupplung 13 auf die Motorausgangswelle 12 des Verbrennungsmotors übertragen. Selbst eine kleine E-Maschine kann bei einem solchen Startvorgang mit der Standübersetzung des Planetengetriebes 30 ein in den meisten Betriebszuständen ausreichend hohes Startdrehmoment erzeugen. Da der Abtrieb 18 steht und nicht etwa gegensinnig dreht, kann nach einem solchen Motorstart das Fahrzeug sofort beschleunigt werden. Bei dem elektrischen Motorstart bei Fahrzeugstillstand bleibt der Variator 20 ungenutzt. Die auf den Motor aufgebrachte Startleistung P_{VMStart} entspricht im Wesentlichen der Leistung der elektrischen Maschine P_{E}. Die Kupplung 28 ist somit ebenfalls geöffnet.

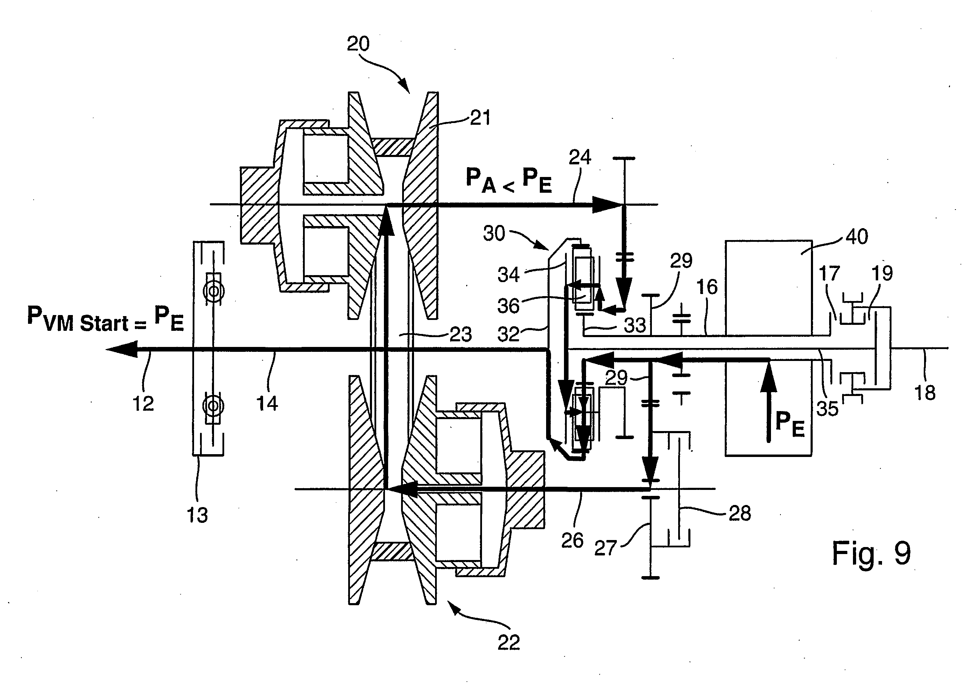

Bei der in Figur 9 gezeigten Betriebssituation, die alternativ zum Start des Motors mittels der E-Maschine 40 verwendet wird, sind die Kupplungen 28 zwischen der Welle 26 des zweiten Kegelscheibenpaares 22 des Variators 20 und der Hohlwelle 16 und die Kupplung 13 zwischen der Motorausgangswelle 12 und der Antriebswelle 14 geschlossen. Die Kupplungen 17, 19, die die Hohlwelle 16 bzw. die fest mit dem Planetenträger 34 des Planetengetriebes 30 verbundene Welle 35 mit der Ausgangswelle 18 verbinden, sind offen. Zum Start des Motors treibt die E-Maschine 40 mit der Leistung P_{E} die Hohlwelle 16 zur Drehung. Über die Verzahnung 29 und das Zwischenrad 27 wird bei geschlossener Kupplung 28 ein Teil der Leistung der E-Maschine 40 auf die Welle 26, die dem zweiten Kegelscheibenpaar 22 zugeordnet ist, übertragen. Unter Ausnutzung der Übersetzung des Variators 20 wird diese Leistung über das Umschlingungsmittel 23 und das erste Kegelscheibenpaar 21 auf die Welle 24, die dem ersten Kegelscheibenpaar 21 zugeordnet ist, übertragen. Die Leistung P_{A} auf der Welle 24 ist kleiner als die Leistung der E-Maschine 40. Nach Ausnutzung der Übersetzung des Variators 20 wird diese Leistung P_{A} über die Verzahnung 25, die mit dem Planetenträger 34 kämmt, an den Planetenträger 34 und von dort über die Planetenräder 36 auf das Hohlrad 32 übertragen. Dies bedeutet, dass der Planetenträger 34 und die fest mit ihm verbundene Welle 35 als Getriebeabtriebswelle sich drehen. Von dem Hohlrad 32 wird mittels der damit fest verbundenen Welle 14 bei geschlossener Kupplung 13 die Leistung an den Verbrennungsmotor als Startleistung P_{VMStart} übertragen. Da im Planetengetriebe die Übersetzungsleistung mit der über die Verzahnung 29 und die Kupplung 28, und somit die über den Variator geleitete abgezweigte Leistung, mit der Leistung zusammengeführt wird, die direkt von der Hohlwelle 16 in das Planetengetriebe 30 fließt, entspricht die Motorstartleistung wiederum im Wesentlichen der Leistung der E-Maschine. Da jedoch die Getriebeabtriebswelle 35 dreht, wie erläutert, ist zum Losfahren des Fahrzeugs die Kupplung 28 zu öffnen und die Kupplung 19 zu schließen.

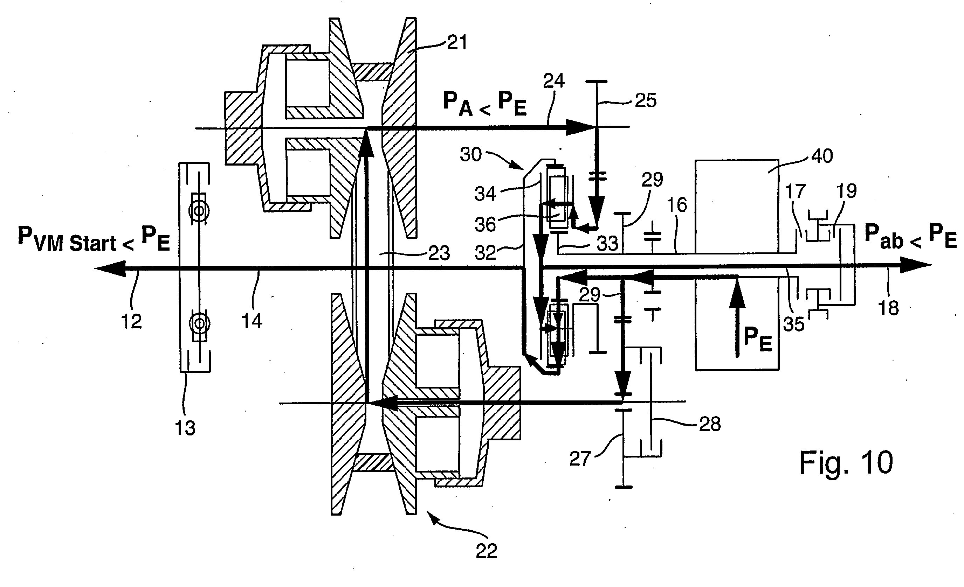

Figur 10 zeigt die Situation, in der ein elektrischer Motorstart aus dem Rangieren erfolgt. Anders als bei der in Verbindung mit Figur 9 beschriebenen Betriebssituation ist zusätzlich die Kupplung 19 geschlossen, d.h. zwischen Ausgangswelle 18 und Getriebeabtriebswelle 35 als der fest mit dem Planetenträger verbundenen Welle ist eine Verbindung hergestellt. Dies bedeutet, dass ein Teil der Leistung P_{E} der E-Maschine 40 als Abtriebsleistung P_{ab} abgegriffen werden kann, während der andere Teil der Leistung P_{E} der E-Maschine 40 als Motorstartleistung P_{VMStart} benutzt wird. Die Kupplungen 13 zwischen der Motorausgangswelle 12 und der Antriebswelle 14 sowie die Kupplung 28 zwischen der Hohlwelle 16 und der dem zweiten Kegelscheibenpaar 22 zugeordneten Welle 26 sind geschlossen. Lediglich die Kupplung 17 zwischen Abtriebswelle 18 und Hohlwelle 16 ist geöffnet.

Die Übersetzung i_{BA} des Variators ist zwischen dem zweiten Kegelscheibenpaar 22 und dem ersten Kegelscheibenpaar 21 maximal, d.h. i_{Vmax} = 2,451 beispielsweise. Umgekehrt bedeutet dies, dass die Übersetzung i_{AB} zwischen dem ersten Kegelscheibenpaar 21 und dem zweiten Kegelscheibenpaar 22 des Variators 20 minimal ist (i_{Vmin} = 0,408 beispielsweise). Während des Motorstarts wird somit ein Beschleunigungsdruck vermieden, wenn die Startleistung zusätzlich von der E-Maschine aufgebracht wird, nach einem elektrischen Rangiervorgang, der beispielsweise in Figur 7 erläutert ist. Durch das Schließen der Kupplung 13 im Vergleich zur in Figur 7 gezeigten Situation wird die E-Maschine 40 durch das Aufbringen der Startleistung für den Verbrennungsmotor kurzzeitig überlastet, was nur bei betriebswarmen Verbrennungsmotoren möglich ist.

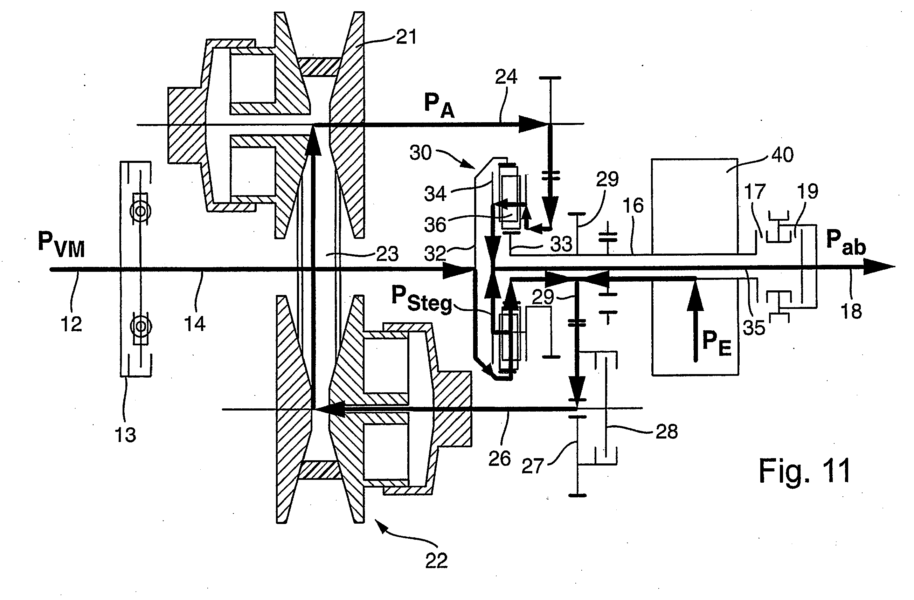

Figur 11 zeigt den E-CVT-Betrieb in einem ersten Fahrbereich. Die von der (nicht dargestellten) Verbrennungskraftmaschine erzeugte Leistung P_{VM} wird über die Motorausgangswelle 12 bei geschlossener Kupplung 13 an die Antriebswelle 14 abgegeben und fließt von dort über das fest mit der Antriebswelle 14 verbundene Hohlrad 32 des Planetengetriebes 30 in das Planetengetriebe 30. Der Teil (P_{Steg}) der Antriebsleistung P_{VM} des Verbrennungsmotors, der im Planetengetriebe 30 abgezweigt wird, indem er vom Hohlrad 32 über die Planetenräder 36 zum Planetenträger 34 fließt und von dort über die mit dem Planetenträger 34 fest verbundene Welle 35 und die geschlossene Kupplung 19 an die Ausgangswelle 18 transferiert wird, ist im Vergleich zu der ebenfalls im Planetengetriebe 30 abgezweigten Leistung P_{A}, die über den Variator 20 fließt, kleiner, d.h. P_{Steg} < P_{A}. Die über den Variator 20 fließende Leistung wird durch eine Übertragung der Leistung vom Hohlrad 32 über die Planetenräder 36 zum Sonnenrad 33 und weiter über die mit dem Sonnenrad 33 fest verbundene Hohlwelle 16, die als Zahnrad 29 auf der Hohlwelle 16 ausgebildete und damit drehfeste Verzahnung und das Zwischenrad 27 bei geschlossener Kupplung 28 auf die Welle 26, die mit dem zweiten Kegelscheibenpaar 22 des Variators 20 verbunden ist, übertragen. Die Leistung P_{A}, die über den Variator übertragen wird, ist nicht nur ein Teil der Leistung P_{VM} der Verbrennungskraftmaschine sondern wird ergänzt durch die Leistung P_{E} der E-Maschine, die ebenfalls über die Hohlwelle 16 und die mit der Hohlwelle gekoppelte Übersetzungskonfiguration aus dem Rad 29 und dem Zwischenrad 27 an die Welle 26 übertragen wird.

Somit teilt sich die Leistung P_{VM} des Verbrennungsmotors im Planetengetriebe 30, wobei der kleinere Teil P_{Steg} direkt zum Abtrieb, insbesondere die Ausgangswelle 18, fließt und der größere Teil, zuzüglich der Leistung P_{E} der E-Maschine 40 über den Variator 20 unter Ausnutzung einer geeigneten Variatorübersetzung zum Abtrieb fließt. Die Kupplung 17 ist geöffnet, die Kupplungen 13, 19 und 28 sind geschlossen. Das Übersetzungsverhältnis der Gesamtanordnung liegt dabei im Bereich des maximalen Übersetzungsverhältnisses bis 1, beispielsweise i = 3,8...1, wie Figur 6 entnehmbar ist, und entspricht somit einem Underdrive. Das Übersetzungsverhältnis i gibt das Drehzahlverhältnis zwischen der Getriebeausgangswelle (n_{ab}) 18 und der Motorausgangswelle (n_{VM}) 12 an, d.h. i = n_{ab}/n_{VM}.

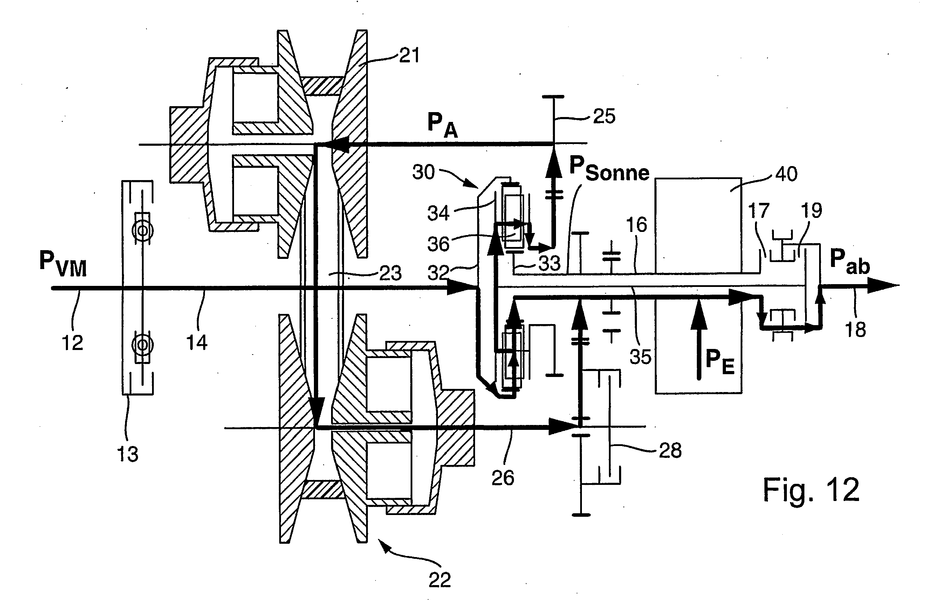

In Figur 12 ist schließlich der zweite Fahrbereich, insbesondere als Overdrive ausgebildet für Übersetzungsverhältnisse i < 1, beispielsweise i = 0,1...0,633, dargestellt. Anders als bei der in Figur 11 dargestellten ersten Fahrsituation ist bei dem in Figur 12 dargestellten zweiten Fahrbereich die Kupplung 19 geöffnet, während die Kupplung 17 geschlossen ist. Dies bedeutet, dass eine direkte Verbindung zwischen der Ausgangswelle 18 und der Hohlwelle 16, die mit dem Sonnenrad 33 des Planetengetriebes drehfest verbunden ist, hergestellt wird, und das Drehmoment über diese Verbindung abgegriffen wird.

Wie im ersten Fahrbereich teilt sich die Leistung P_{VM} des Verbrennungsmotors im Planetengetriebe, wobei der größere Teil (P_{Sonne}) der Leistung des Verbrennungsmotors P_{VM} zuzüglich der Leistung der elektrischen Maschine 40 (P_{E}) direkt zum Abtrieb über die geschlossene Kupplung 17 fließt. Ein kleinerer Teil (P_{A}) fließt über den Variator zum Abtrieb und zwar über den Planetenträger 32 und des mit der Welle 24 des ersten Kegelscheibenpaars 21 des Variators verbundene Zahnrad 25 zum ersten Kegelscheibenpaar 21 des Variators, über das Umschlingungsmittel 23 zum zweiten Kegelscheibenpaar 22 des Variators 20 und dort über die geschlossene Kupplung 28 zur Hohlwelle 16. In diesem Fahrbereich ist P_{A} als die über dem Variator übertragene Leistung kleiner als die über das Sonnenrad 33 übertragene Leistung: P_{A} < P_{Sonne}.

Aufgrund der zwei vorgesehen Fahrbereiche ist im Variator nur ein verhältnismäßig kleiner Stellbereich erforderlich. Außerdem fließt über den Variator im Mittel nur ein sehr geringer Leistungsanteil, was dazu beiträgt, den Variator vor möglichen hohen Momenten zu schützen und die Lebensdauer von Variatorkomponenten zu erhöhen. Die Anzahl der Fahrbereiche ist auf zwei reduziert, was die Komplexität der Getriebesteuerung verringert und auch dynamisch hoch anspruchsvolle Komponenten reduziert, wobei die Leistungsteilung stets ungleichmäßig erfolgt, damit in den häufigsten Betriebszuständen des Getriebes die über den Variator übertragenen Momente minimal werden.

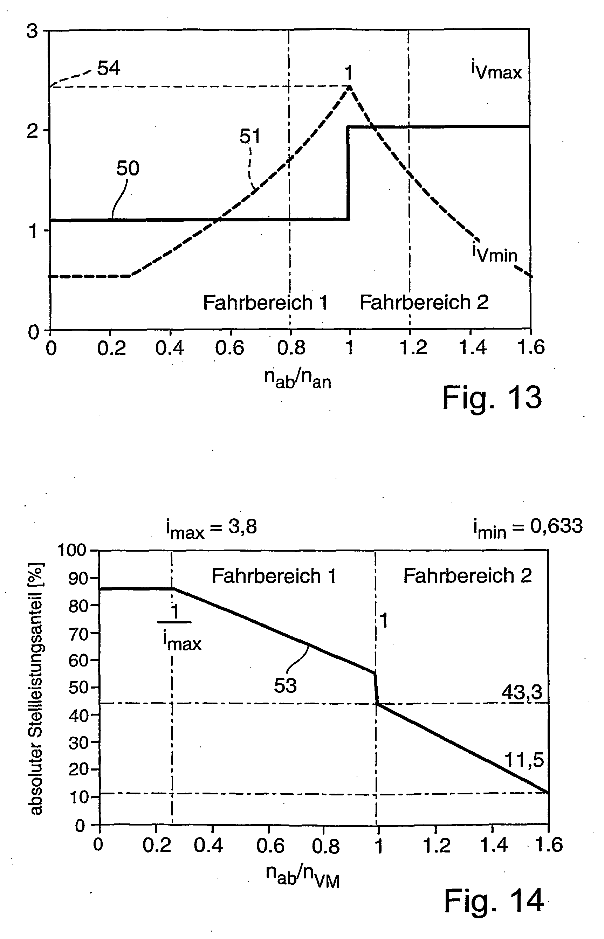

In Figur 13 sind für die auf der X-Achse aufgetragenen Übersetzungsverhältnisse i = n_{ab}/nₐₙ, d.h. Drehmoment der Ausgangswelle 18 zu Drehmoment der Motorausgangswelle 12 mit der Linie 50 die jeweiligen Fahrbereiche (erster und zweiter Fahrbereich) und mit der Linie 51 die zugehörigen Variatorübersetzungen angegeben. Die Linie 54 zeigt an, bei welcher Variatorübersetzung das Getriebe besonders vorteilhaft ohne Übersetzungssprung vom einen in den anderen Fahrbereich wechseln kann. Es zeigt sich, dass die Variatorübersetzungen in den beiden Fahrbereichen gegenläufig sind. Dargestellt ist der Fall für eine maximale Variatorübersetzung von 2,451 (Linie 54) und eine minimale Variatorübersetzung von 0,408, was einem Verhältnis von maximaler Variatorübersetzung zu minimaler Variatorübersetzung von etwa 6 entspricht.

In Figur 14 ist der absolute Stellleistungsanteil in Prozent des Variators angegeben. In den häufigsten Fahrsituationen ist der Stellleistungsanteil des Variators niedrig. Dies wird dadurch erzielt, dass stets eine ungleichmäßige Leistungsteilung im Planetengetriebe 30 stattfindet, sowohl im ersten als auch im zweiten Fahrbereich. Die Leistung der Verbrennungskraftmaschine wird also nicht hälftig aufgeteilt sondern derart, dass eine möglichst große Entlastung des Variators möglich ist und der Stellleistungsanteil des Variators in den häufigsten Fahrsituationen niedrig ist.

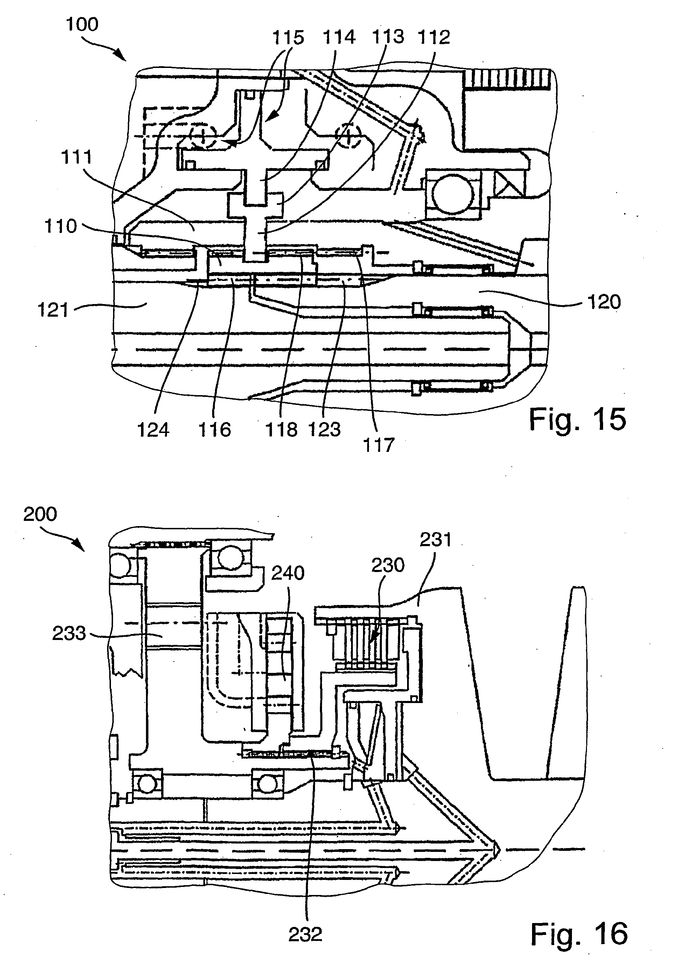

Figuren 15, 16 und 17 zeigen eine Schaltanordnung für Kupplungsbauteile, eine Variatorkupplungseinheit, bzw. einen Freilauf zur Schaltpunktstabilisierung, die insbesondere zur Verwendung in einem leistungsverzweigten Getriebe, wie es in Verbindung mit Figuren 1 bis 14 beschrieben wurde, geeignet sind. Grundsätzlich sind die Anordnungen jedoch auch allgemein für CVT-Getriebe oder andere Getriebearten einsetzbar.

Die in Figur 15 gezeigte Schaltanordnung ist beispielsweise für die Kupplungsanordnung zwischen der Hohlwelle 16, der mit dem Planetenträger 34 des Planetengetriebes 30 fest verbundenen Welle 35 und der Abtriebswelle 18 zur verwendeten Kupplungsanordnung aus den Kupplungen 17, 19 einsetzbar. Es handelt sich um einen Detailausschnitt aus Figur 4.

Die Schaltanordnung 100 ist derart gestaltet, dass ein ringförmiges Schaltelement 110 derart verschiebbar ist und als Kupplungselement wirkt, dass es beim Durchlaufen des Schaltwegs keinen Neutralbereich besitzt. Dies macht den Schaltweg so kurz wie möglich, was für ein E-CVT-Getriebe gemäß der vorherigen Beschreibung aufgrund der dort erforderlichen hohen Dynamik vorteilhaft ist. Insbesondere weist die Anordnung eine erste Welle 120 und eine zweite Welle 121 auf, die um eine gemeinsame Drehachse drehen und zumindest bereichsweise, nämlich in dem Bereich, in dem das Schaltelement 110 in Eingriff gelangt, mit einer im Wesentlichen gemeinsamen fluchtenden Außenkonfiguration versehen sind. Sowohl die erste Welle 120 als auch die zweite Welle 121 weist eine Außenverzahnung 123, 124 auf, die mit einem Ring der Innenverzahnung 116 des ringförmigen Schaltelements 110 in Eingriff bringbar ist. Dabei ist die Länge des Schaltelements 110 in Axialrichtung der Wellen 120, 121 derart bemessen, dass das Schaltelement gleichzeitig mit beiden Verzahnungsbereichen 123, 124 in Eingriff sein kann und somit eine Drehmomentenübertragung zwischen der Welle 121 ermöglicht.

Die Wellen 120, 121 sowie das Schaltelement 110 umfassend ist ferner eine Hohlwelle 111 vorgesehen, die in einem den Verzahnungsbereichen 123, 124 der Wellen 120, 121 gegenüberliegenden Bereich eine Innenverzahnung 117 aufweist. In der dargestellten Ausführungsform ist sowohl dem Verzahnungsbereich 124 als auch dem Zahnungsbereich 123 gegenüberliegend die Verzahnung 117 vorgesehen. Die Innenverzahnung 117 der Hohlwelle 111 kann in Eingriff mit einer Außenverzahnung 118 auf dem Schaltelement gelangen, so dass bei einer Verschiebung des Schaltelements 110 in Axialrichtung der Wellen 120, 121 und der Hohlwelle 111 das Schaltelement eine Verbindung zwischen der Verzahnung 123 der Welle 120 und der Innenverzahnung 117 der Hohlwelle 111 herstellen kann bzw., wenn es in der Figur ganz nach links geschoben ist, eine Verbindung zwischen der Außenverzahnung 124 der Welle 121 und der Innenverzahnung 117 der Hohlwelle 111 herstellen kann, so dass wahlweise eine Drehmomentenübertragung zwischen einer der Wellen 120, 121 und der Hohlwelle 111 möglich ist. Je nach Bedarf kann auch eine der Verbindungsfunktionen weggelassen werden, so dass beispielsweise das Schaltelement 110 nur eine Verbindung zwischen den Wellen 121, 120 oder zwischen der Welle 120 und der Hohlwelle 111 herstellen kann, jedoch keine Verbindung zwischen der Hohlwelle 111 und der Welle 121.

Zur Verschiebung des Schaltelements 110 in Axialrichtung der Wellen 120, 121, 111 ist ein Zapfen 112 vorgesehen, der in Eingriff mit dem Schaltelement 110 ist und ausgehend von einer mit der Hohlwelle 111 synchron drehenden Schiebemuffe 113, die koaxial zur Hohlwelle 111 vorgesehen ist, durch ein Langloch (nicht dargestellt) in der Hohlwelle 111 geführt ist und mit dem Schaltelement 110 in Eingriff ist. Eine Schaltgabel 114 ist feststehend und wird hydraulisch durch ebenfalls feststehende Druckkammern 115 axial betätigt, so dass die Schiebemuffe 113 axial verschoben wird und damit der Zapfen 112, der durch die Langlöcher in der Hohlwelle 111 reicht, mit verschoben wird, was das Schaltelement 110 betätigt. Aufgrund der stehenden Druckkammern 115 ist eine Vereinfachung gegenüber mit den Wellen mitdrehenden Druckkammern erreicht, da keine Drehführungen von Nöten sind und keine Kompensation von Fliehkräften im hydraulischen Fluid erforderlich ist.

In Figur 16 ist schließlich eine Variatorkupplungseinheit 200 dargestellt, die direkt in eine Festscheibe des Variators integriert werden kann. Insbesondere bei der in Figur 2 dargestellten Anordnung des E-CVT-Getriebes kann beispielsweise diese Variatorkupplungseinheit 200 in die Kegelscheibe 22a, die die Festscheibe des Kegelscheibenpaares 22 ist, als Kupplungsanordnung 28 integriert werden.

Grundsätzlich stellen die starke Biegung von Variatorwellen und die begrenzte Möglichkeit, Bohrungen für hydraulische Betätigungselemente in den Variatorwellen einzubringen, Schwierigkeiten bei der Anordnung von weiteren Bauelementen auf einer Variatorwelle dar. Beispielsweise werden die Kupplungen und eventuell zugehörige Wendesätze, wie auch in Figuren 1, 2 und 3 dargestellt, als getrennte Bausätze ausgeführt. Manchmal wird dafür auch eine eigene Welle vorgesehen.

Bei der in Figur 16 dargestellten Ausführungsform für eine Variatorkupplungseinheit 200 wird hingegen die Biegung und damit eine umlaufende Ungleichbelastung der Kupplungsbeläge 230, die in eine Ausnehmung in der Festscheibe 231 eines Variators integriert sind, bewusst in Kauf genommen. Die Kupplung 230 ist beispielsweise als Lamellenkupplung ausgeführt, wobei jedoch auch andere Kupplungen, insbesondere reibschlüssige Kupplungen zum Einsatz kommen können. Einscheiben- oder Mehrscheibenkupplungen sind ebenfalls möglich, solange sie die erforderlichen Momente übertragen können. Die Reibbeläge einer Kupplungsseite sind dabei fest mit dem Variator, insbesondere der Festscheibe 231 des Variators verbunden, was somit eine sehr steife Anordnung einer Kupplungsseite bzw. einer Reibflächenseite 230 mit der Festscheibe darstellt. Die andere Kupplungsseite, die die Verbindung zum Gegenbauteil herstellt, ist in einer Steckverzahnung 232 geführt. Die Steckverzahnung 232 federt Verformungen ab, so dass beispielsweise eine weiter im Leistungsfluss vorgesehene Verzahnung 233 ausreichend entkoppelt ist, um Tragbildveränderungen, die durch die Verbiegung der Variatorwellen entstehen, zu kompensieren.

In entsprechender Weise kann beispielsweise auch eine Pumpeneinheit 240, z.B. die Pumpenanordnung 42 aus Figur 1, über die Steckverzahnung angeschlossen werden. Die Anordnung der Lamellenkupplung 230 starr in einer Ausnehmung des Variators stellt somit einen Beitrag zur Einsparung vom Bauraum dar. Die Verformung wird über ein separates Bauteil, nämlich in diesem Fall die Steckverzahnung 232, kompensiert.

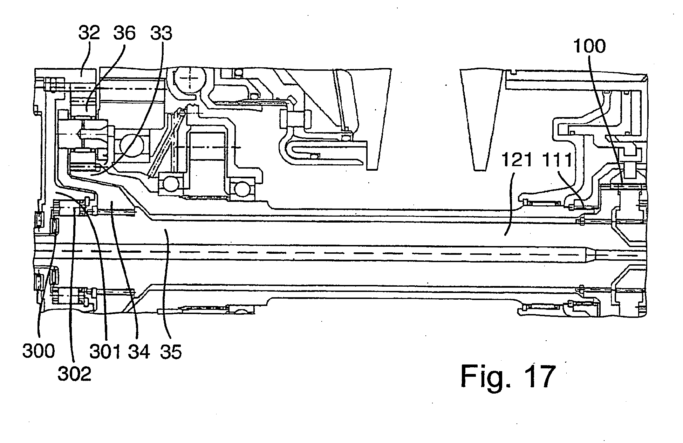

Figur 17 zeigt die Einbausituation des Freilaufs 302, welcher erfindungsgemäß dafür sorgt, dass die Umschaltübersetzung exakt eingestellt werden kann, so dass das Umschalten ohne Schläge durch ein formschlüssiges Schaltelement 100 erfolgen kann. Diese problemlose Betätigung des Schaltelementes wird möglich, weil beim Sperren des Freilaufes 302 die Bauteile 111 und 121 gleiche Drehzahl aufweisen.

Der Freilauf 302 ist hier konstruktiv zwischen dem Hohlrad 32, bzw. einem mit dem Hohlrad verbundenen Abstützteil 301 und dem Planetenträger 34 wirksam. Der Freilauf sperrt, sobald das Hohlrad 32 den Planetenträger 34 zu überholen droht. Dies ist dann der Fall, wenn der Planetenträger 34 bzw. die mit ihm verbundenen Welle 35 seinerseits das Sonnenrad 32 zu überholen droht.

Dieser Zustand des Sperrens des Freilaufes wird dadurch erzeugt, dass der Variator bewusst zu einer Übersetzung oberhalb der Umschalt-Übersetzung 54 (vgl. Figur 13) angesteuert wird. Mit dieser Ansteuerung z.B. durch Druckbeaufschlagung wird die Scheibensatzwelle 21 gegenüber der Scheibensatzwelle 22 beschleunigt. Da die Scheibensatzwellen 21 bzw. 22 über Stirnradstufen mit dem Planetenträger 34 bzw. dem Sonnenrad 33 verbunden sind, wird die Sperrbedingung erfüllt.

### Bezugszeichenliste

- 10: leistungsverzweigtes Getriebe
- 12: Motorausgangswelle
- 13: Kupplung
- 14: Antriebswelle
- 16: Hohlwelle
- 17: Kupplung
- 18: Ausgangswelle
- 19: Kupplung
- 20: Variator
- 21: erstes Kegelscheibenpaar
- 21a: Festscheibe
- 21b: Verstellscheibe
- 22: zweites Kegelscheibenpaar
- 22a: Festscheibe
- 2b: Verstellscheibe
- 23: Umschlingungsmittel
- 24: Welle
- 25: Zwischenrad
- 26: Welle
- 27: Zwischenrad
- 28: Kupplungseinrichtung
- 29: Verzahnung
- 30: Planetengetriebe
- 32: Hohlrad
- 33: Sonnenrad
- 34: Planetenträger
- 35: Welle
- 36: Planetenräder
- 40: elektrische Maschine (E-Maschine)
- 42: Pumpeneinheit
- 44: Gehäuseteil
- 46: Gehäuseteil
- 48: Flansch
- 50: Fahrbereich
- 51: Variatorübersetzung
- 53: Stellleistungsanteil
- 54: Variatorübersetzung, bei der die Umschaltung erfolgt
- 100: Schaltanordnung
- 110: Schaltelement
- 111: Hohlwelle
- 112: Zapfen
- 113: Schiebemuffe
- 116: Innenverzahnung
- 117: Innenverzahnung
- 118: Außenverzahnung
- 120: Welle
- 121: Welle
- 122: Außenverzahnung
- 124: Außenverzahnung
- 200: Variatorkupplungseinheit
- 231: Festscheibe
- 230: Reibflächenanordnung
- 300: Abstützbauteil des Hohlrades
- 301: Lager zur Abstützung
- 301: Freilauf zur Schaltpunktstabilisierung

## Patentansprüche

1. Leistungsverzweigtes Getriebe (10) mit mehreren Übersetzungsbereichen mit stufenlos verstellbarer Übersetzung, enthaltend eine Antriebswelle (14) zur drehfesten Verbindung mit einem Motor, ein Verteilergetriebe (30), einen Variator (20) und eine Ausgangswelle (18), wobei das Verteilergetriebe ein Planetengetriebe (30) ist und die Antriebswelle (14) unmittelbar mit dem Hohlrad (32) des Planetengetriebes kuppelbar ist, **dadurch gekennzeichnet, dass** eine E-Maschine (40) vorgesehen ist, die zwischen dem Verteilergetriebe (30) und einer Abtriebswelle (16) angeordnet ist.

2. Leistungsverzweigtes Getriebe (10) nach Anspruch 1, **dadurch gekennzeichnet, dass** die Antriebswelle (14) und das Hohlrad (32) des Planetengetriebes (30) mittels einer Kupplung (13) drehfest mit dem Motor (V_{M}) verbindbar sind.

3. Leistungsverzweigtes Getriebe (10) nach einem der vorhergehenden Ansprüche, **dadurch gekennzeichnet, dass** der Variator (20) im Leistungsfluss zwischen dem Verteilergetriebe (30) und der Ausgangswelle (18) vorgesehen ist.

4. Leistungsverzweigtes Getriebe (10) nach einem, der Ansprüche 1 bis 3, **dadurch gekennzeichnet, dass** der Variator (20) im Leistungsfluss zwischen dem Verteilergetriebe (30) und der E-Maschine (40) angeordnet ist.

5. Leistungsverzweigtes Getriebe (10) nach Anspruch 4, **dadurch gekennzeichnet, dass** im Verteilergetriebe (30) eine Verzweigung des Leistungsflusses stattfindet, derart, dass die Ausgangswelle (18) unter Umgehung des Variators (20) mit der Antriebswelle (14) verbindbar ist und die Ausgangswelle (18) über den Variator (20) mit der Antriebswelle (14) verbindbar ist und die Aufteilung der Leistung ungleichmäßig ist.

6. Leistungsverzweigtes Getriebe (10) nach einem der Ansprüche 1 bis 5, **dadurch gekennzeichnet, dass** die E-Maschine (40) mit einer mit dem Sonnenrad (33) des Planetengetriebes drehfest verbundenen Welle (35) verbunden ist.

7. Leistungsverzweigtes Getriebe (10) nach einem der Ansprüche 1 bis 6, **dadurch gekennzeichnet, dass** die E-Maschine (40) in ein Getriebegehäuse (44, 46) integriert ist, das auch den Variator (20) und das Verteilergetriebe (30) aufnimmt, wobei, betrachtet in einer Längsrichtung des Getriebes von der Antriebswelle (14) zur Ausgangswelle (18), die E-Maschine (40) auf einer Seite des Variators (20) und das Verteilergetriebe (30) auf der anderen Seite des Variators (20) positioniert sind.

8. Leistungsverzweigtes Getriebe (10) nach Anspruch 7, **dadurch gekennzeichnet, dass** die E-Maschine (40) in einem separaten Getriebegehäuseteil (46) untergebracht ist, das an das den Variator (20) und das Verteilergetriebe (30) aufnehmende Getriebegehäuseteil (44) anflanschbar ist.

9. Leistungsverzweigtes Getriebe (10) nach Anspruch 7 oder 8, **dadurch gekennzeichnet, dass** die Variatorwellen (24, 26) eine Ebene aufspannen und die Antriebswelle (14) und Ausgangswelle (18) außerhalb und parallel zur Ebene verlaufen.

10. Leistungsverzweigtes Getriebe (10) nach einem der vorhergehenden Ansprüche, **dadurch gekennzeichnet, dass** das Planetengetriebe (30) als Wende-Planetengetriebe ausgeführt ist.

11. Leistungsverzweigtes Getriebe (10) nach einem der vorhergehenden Ansprüche, **dadurch gekennzeichnet, dass** eine Kupplung (17, 19) vorgesehen ist, mit der wahlweise eine mit dem Sonnenrad (33) des Planetengetriebes (30) drehfest verbundene Welle (35) oder eine mit dem Planetenträger (32) des Planetengetriebes (30) drehfest verbundene Welle (16) mit der Abtriebswelle (18) verbindbar sind.

12. Leistungsverzweigtes Getriebe (10) nach einem der vorhergehenden Ansprüche, **dadurch gekennzeichnet, dass** eine der Wellen (26) des Variators (20) mit einer Kupplung (28) mit einer mit dem Sonnenrad (33) des Planetengetriebes (30) drehfest verbundenen Welle (16) kuppelbar ist, und die andere der Wellen (26) des Variators (20) mit dem Planetenträger (34) des Planetengetriebes (30) verbunden ist.

13. Leistungsverzweigtes Getriebe (10) nach einem der vorangehenden Ansprüche, **dadurch gekennzeichnet, dass** durch einen Freilauf (302) alle Drehzahlen im Verteilergetriebe (30) gleichgesetzt werden, wenn der Variator (20) über die Bereichswechsel-Übersetzung (54) hinaus angesteuert wird.

14. Leistungsverzweigtes Getriebe nach Anspruch 13, **dadurch gekennzeichnet, dass** die Schaltanordnung (100) betätigt wird, wenn der Variator (20) über die Bereichswechsel-Übersetzung (54) hinaus angesteuert wird.

## Claims

1. Power-split gearbox (10) having a plurality of transmission ratio ranges with continuously variable transmission ratio, comprising a drive input shaft (14) for connecting to an engine for conjoint rotation therewith, a transfer box (30), a variator (20) and an output shaft (18), with the transfer box being a planetary gear set (30) and with it being possible for the drive input shaft (14) to be coupled directly to the internal gear (32) of the planetary gear set, **characterized in that** an electric machine (40) is provided which is arranged between the transfer box (30) and a drive output shaft (16).

2. Power-split gearbox (10) according to Claim 1, **characterized in that** the drive input shaft (14) and the internal gear (32) of the planetary gear set (30) can be connected by means of a clutch (13) to the engine (V_{M}) for conjoint rotation therewith.

3. Power-split gearbox (10) according to one of the preceding claims, **characterized in that** the variator (20) is provided in the power flow between the transfer box (30) and the output shaft (18).

4. Power-split gearbox (10) according to one of Claims 1 to 3, **characterized in that** the variator (20) is arranged in the power flow between the transfer box (30) and the electric machine (40).

5. Power-split gearbox (10) according to Claim 4, **characterized in that** splitting of the power flow takes place in the transfer box (30), in such a way that the output shaft (18) can be connected to the drive input shaft (14) so as to bypass the variator (20), and the output shaft (18) can be connected to the drive input shaft (14) via the variator (20), and the distribution of the power is uneven.

6. Power-split gearbox (10) according to one of Claims 1 to 5, **characterized in that** the electric machine (40) is connected to a shaft (35) which is connected to the sun gear (33) of the planetary gear set for conjoint rotation therewith.

7. Power-split gearbox (10) according to one of Claims 1 to 6, **characterized in that** the electric machine (40) is integrated into a gearbox housing (44, 46) which also holds the variator (20) and the transfer box (30), with the electric machine (40) being positioned on one side of the variator (20) and the transfer box (30) being positioned on the other side of the variator (20) as viewed in a longitudinal direction of the gearbox from the drive input shaft (14) to the output shaft (18).

8. Power-split gearbox (10) according to Claim 7, **characterized in that** the electric machine (40) is accommodated in a separate gearbox housing part (46) which can be flange-mounted on the gearbox housing part (44) which holds the variator (20) and the transfer box (30).

9. Power-split gearbox (10) according to Claim 7 or 8, **characterized in that** the variator shafts (24, 26) span a plane and the drive input shaft (14) and output shaft (18) run outside and parallel to the plane.

10. Power-split gearbox (10) according to one of the preceding claims, **characterized in that** the planetary gear set (30) is designed as a reversing planetary gear set.

11. Power-split gearbox (10) according to one of the preceding claims, **characterized in that** a clutch (17, 19) is provided by means of which a shaft (16) which is connected to the sun gear (33) of the planetary gear set (30) for conjoint rotation therewith, or a shaft (35) which is connected to the planet carrier (34) of the planetary gear set (30) for conjoint rotation therewith, can be selectively connected to the output shaft (18).

12. Power-split gearbox (10) according to one of the preceding claims, **characterized in that** one of the shafts (26) of the variator (20) can be coupled by means of a clutch (28) to a shaft (16) which is connected to the sun gear (33) of the planetary gear set (30) for conjoint rotation therewith, and the other of the shafts (26) of the variator (20) is connected to the planet carrier (34) of the planetary gear set (30).

13. Power-split gearbox (10) according to one of the preceding claims, **characterized in that**, by means of a freewheel (302), all rotational speeds in the transfer box (30) are equalized if the variator (20) is driven beyond the range change transmission ratio (54).

14. Power-split gearbox according to Claim 13, **characterized in that** the shift arrangement (100) is actuated if the variator (20) is driven beyond the range change transmission ratio (54).

## Revendications

1. Boîte de vitesses à dérivation de puissance (10) comprenant plusieurs plages de transmission à transmission variable en continu, comprenant un arbre d'entraînement (14) destiné à être connecté de manière solidaire en rotation à un moteur, une boîte de distribution (30), un variateur (20) et un arbre de sortie (18), la boîte de distribution étant un engrenage planétaire (30) et l'arbre d'entraînement (14) pouvant être accouplé directement à la couronne (32) de l'engrenage planétaire, **caractérisée en ce qu'**il est prévu une machine électrique (40) qui est disposée entre la boîte de distribution (30) et un arbre de prise de force (16).

2. Boîte de vitesses à dérivation de puissance (10) selon la revendication 1, **caractérisée en ce que** l'arbre d'entraînement (14) et la couronne (32) de l'engrenage planétaire (30) peuvent être connectés de manière solidaire en rotation au moteur (V_{M} ) au moyen d'un embrayage (13).

3. Boîte de vitesses à dérivation de puissance (10) selon l'une quelconque des revendications précédentes, **caractérisée en ce que** le variateur (20) est prévu dans le flux de puissance entre la boîte de distribution (30) et l'arbre de sortie (18).

4. Boîte de vitesses à dérivation de puissance (10) selon l'une quelconque des revendications 1 à 3, **caractérisée en ce que** le variateur (20) est disposé dans le flux de puissance entre la boîte de distribution (30) et la machine électrique (40).

5. Boîte de vitesses à dérivation de puissance (10) selon la revendication 4, **caractérisée en ce qu'**une dérivation du flux de puissance a lieu dans la boîte de distribution (30), de telle sorte que l'arbre de sortie (18) puisse être connecté à l'arbre d'entraînement (14) en contournant le variateur (20) et que l'arbre de sortie (18) puisse être connecté à l'arbre d'entraînement (14) par le biais du variateur (20) et que la distribution de puissance ne soit pas uniforme.

6. Boîte de vitesses à dérivation de puissance (10) selon l'une quelconque des revendications 1 à 5, **caractérisée en ce que** la machine électrique (40) est connectée à un arbre (35) connecté de manière solidaire en rotation à la roue solaire (33) de l'engrenage planétaire.

7. Boîte de vitesses à dérivation de puissance (10) selon l'une quelconque des revendications 1 à 6, **caractérisée en ce que** la machine électrique (40) est intégrée dans un boîtier de transmission (44, 46) qui reçoit également le variateur (20) et la boîte de distribution (30), la machine électrique (40), considérée dans une direction longitudinale de la boîte de vitesses depuis l'arbre d'entraînement (14) jusqu'à l'arbre de sortie (18), étant positionnée d'un côté du variateur (20) étant la boîte de distribution (30) étant positionnée de l'autre côté du variateur (20).

8. Boîte de vitesses à dérivation de puissance (10) selon la revendication 7, **caractérisée en ce que** la machine électrique (40) est montée dans une partie de boîtier de transmission séparée (46), qui peut être bridée à la partie de boîtier de transmission (44) recevant le variateur (20) et la boîte de distribution (30).

9. Boîte de vitesses à dérivation de puissance (10) selon la revendication 7 ou 8, **caractérisée en ce que** les arbres du variateur (24, 26) sous-tendent un plan et l'arbre d'entraînement (14) et l'arbre de sortie (18) s'étendent à l'extérieur et parallèlement à ce plan.

10. Boîte de vitesses à dérivation de puissance (10) selon l'une quelconque des revendications précédentes, **caractérisée en ce que** l'engrenage planétaire (30) est réalisé sous forme d'engrenage planétaire réversible.

11. Boîte de vitesses à dérivation de puissance (10) selon l'une quelconque des revendications précédentes, **caractérisée en ce qu'**il est prévu un embrayage (17, 19) avec lequel, de manière sélective, un arbre (16) connecté de manière solidaire en rotation à la roue solaire (33) de l'engrenage planétaire (30) ou un arbre (35) connecté de manière solidaire en rotation au support planétaire (34) de l'engrenage planétaire (30) peuvent être connectés à l'arbre de sortie (18).

12. Boîte de vitesses à dérivation de puissance (10) selon l'une quelconque des revendications précédentes, **caractérisée en ce que** l'un des arbres (26) du variateur (20) peut être accouplé au moyen d'un embrayage (28) à un arbre (16) connecté de manière solidaire en rotation à la roue solaire (33) de l'engrenage planétaire (30) et l'autre des arbres (26) du variateur (20) est connecté au support planétaire (34) de l'engrenage planétaire (30).

13. Boîte de vitesses à dérivation de puissance (10) selon l'une quelconque des revendications précédentes, **caractérisée en ce que** tous les régimes dans la boîte de distribution (30) sont égalisés par une roue libre (302), lorsque le variateur (20) est commandé au-delà de la transmission à changement de plage (54).

14. Boîte de vitesses à dérivation de puissance selon la revendication 13, **caractérisée en ce que** l'agencement de changement de vitesses (100) est actionné lorsque le variateur (20) est commandé au-delà de la transmission à changement de plage (54).
